# DEMANDE DE BREVET EUROPEEN

(11) **EP 2 383 495 A1**
(43) Date de publication de la demande: **02.11.2011**
(21) Numéro de dépôt: 10161336.2
(22) Date de dépôt: 28.04.2010
(51) Int. Cl.: F16K 3/28, G01N 1/20

(54) **Dispositif de prélèvement d'échantillons de produit**

(71) Demandeur: Famat S.A., 1025 St-Sulpice (CH)
(72) Inventeur: Favre, Pascal, 1028, Préverenges (CH)
(74) Mandataire: Ganguillet, Cyril

(57) **Abrégé**

L'invention concerne un dispositif (1) de prélèvement d'échantillons de produit destiné à être connecté de manière amovible à une vanne de soutirage (10) munie d'une ouverture de sortie (11) de produit, comprenant:
- un réservoir (20) apte à contenir le produit à prélever, ledit réservoir étant muni d'une ouverture d'admission (21) à travers laquelle le produit à prélever peut pénétrer à l'intérieur du réservoir,
- des moyens de connexion (28) aptes à fixer de manière amovible ledit réservoir (20) à ladite vanne de soutirage (10),
- des moyens (30) de fermeture étanche de ladite ouverture de sortie (11) et de ladite ouverture d'admission (21),

caractérisé en ce que lesdits moyens de fermeture étanche comprennent un piston (30) définissant une direction axiale D, ledit piston possédant au moins une première position dans laquelle le produit à prélever peut circuler à travers les ouvertures de sortie (11) et d'admission (21) et au moins une seconde position dans laquelle les ouvertures de sortie (11) et d'admission (21) sont fermées et empêchent le produit de pénétrer à l'intérieur du réservoir (20),
et en ce qu'un élément d'obturation (50) séparable fixé de manière amovible à une partie non séparable du piston (30) et configuré pour obturer ladite ouverture de sortie (11) dans la seconde position du piston (30) est apte à se détacher de ladite partie non séparable dans ladite seconde position lorsque le réservoir (20) est déconnecté de la vanne de soutirage (10).

## Description

### Domaine technique

La présente invention concerne un dispositif de prélèvement d'échantillons de produit destiné à être connecté de manière amovible à une vanne de soutirage. Ce dispositif s'avère particulièrement adapté pour prélever des produits toxiques, ou plus généralement des produits nécessitant un environnement particulier lors de leur manipulation.

### Etat de la technique

Dans certains secteurs techniques, notamment dans les industries chimiques et alimentaires, il existe un besoin pour prélever des échantillons de produit à partir de récipients contenant des liquides ou des poudres. Comme décrit dans les brevets CH-637456 et EP-1282795-B1, ces prélèvements s'opèrent généralement au moyen de vannes de soutirage équipant des tubulures de soutirage raccordées aux récipients. Dans ce cas, le prélèvement d'échantillons s'opère au moyen d'un réservoir de prises d'échantillons raccordé sur une des conduites de la vanne de soutirage. Jusqu'à présent, ces réservoirs étaient équipés de vannes papillon qui, en fonction de leur position, autorisaient ou pas l'introduction des produits à l'intérieur desdits réservoirs. Toutefois, il s'avère que ces vannes papillon présentent l'inconvénient d'interposer certaines de leurs surfaces au flux de produit lors du remplissage desdits réservoirs. Il en résulte que ces surfaces sont partiellement couvertes de produit une fois le remplissage effectué. Par la suite, lors des manipulations du réservoir, ceci peut donc être particulièrement gênant si les produits prélevés doivent impérativement être isolés du milieu ambiant car, dans ce cas, les produits recouvrant les surfaces de la vanne papillon risquent de produire des réactions violentes ou de contaminer accidentellement le milieu ambiant avec des conséquences graves pour l'utilisateur ou les personnes travaillant au sein des laboratoires.

La présente invention vise donc à fournir une solution au problème susmentionné. Elle vise en particulier à proposer un dispositif de prélèvement d'échantillons dans lequel le volume du réservoir de prise reste confiné depuis l'opération de prélèvement jusqu'à l'ouverture volontaire du réservoir en laboratoire et dans lequel toutes les manipulations du réservoir sont "propres". Notamment, après le prélèvement, le réservoir est enlevé sans contamination des surfaces de séparation.

### Divulgation de l'invention

A cet effet, conformément à l'invention, il est proposé un dispositif de prélèvement d'échantillons conforme à la revendication 1. D'autres configurations possibles de l'invention sont définies dans les revendications 2 à 16.

Ainsi configuré, le dispositif selon l'invention permet de raccorder de manière hermétique un réservoir destiné à prélever des échantillons de produit sur une vanne de soutirage. Ce dispositif présente, d'une part, l'avantage que le volume intérieur du réservoir peut être isolé de l'extérieur avant et après son raccordement à la vanne de soutirage et, d'autre part, que, lors de la séparation, les parties qui ont été en contact avec le produit lors du remplissage du réservoir sont également isolées de l'extérieur, évitant ainsi les inconvénients mentionnées précédemment.

### Brève description des dessins

D'autres avantages et caractéristiques de la présente invention seront mieux compris à la lecture d'un mode particulier de réalisation de l'invention et en référence aux dessins dans lesquels:
- la figure 1 représente une vue en perspective d'un dispositif selon l'invention selon la direction avant-arrière, dans lequel les éléments principaux ont été volontairement déconnectés et dans lequel certains éléments ont été à moitié tronqués de manière à voir leur intérieur;
- la figure 2 représente une vue en perspective du dispositif de la figure 1 selon la direction arrière-avant, dans lequel les éléments principaux ont été volontairement déconnectés et dans lequel, pour améliorer la compréhension du dispositif, certains éléments sont formés en un matériau transparent.

### Description détaillée d'un mode d'exécution de l'invention

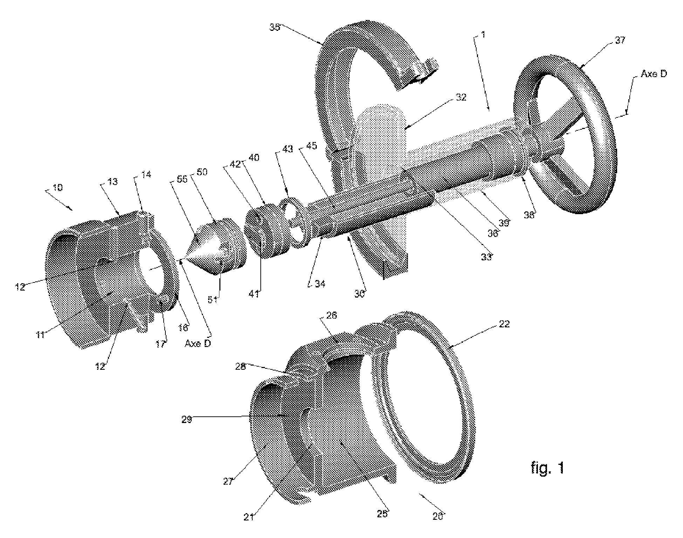

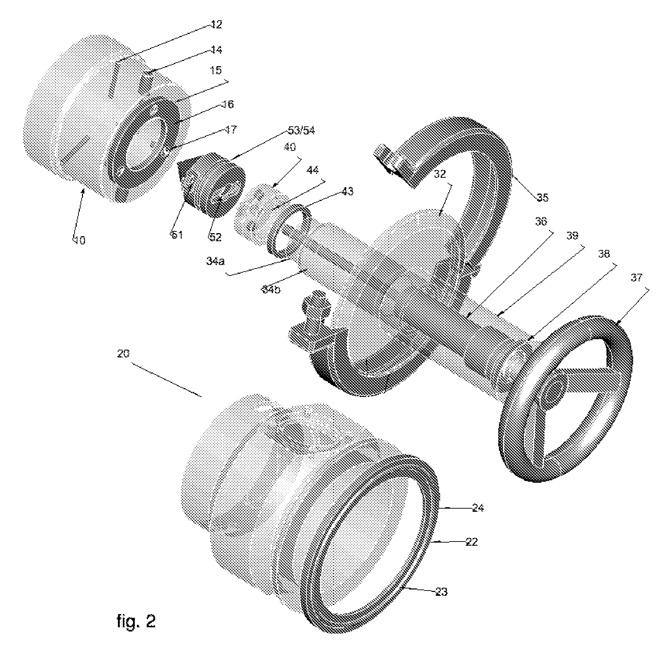

En référence aux figures 1 et 2, il est représenté un dispositif de prélèvement d'échantillons de produit conforme à la présente invention.

Ce dispositif 1 est destiné à venir se raccorder à une vanne de soutirage (non représentée) telle que définie, par exemple, dans le brevet CH 637 456. Toutefois, comme nous le verrons de manière plus détaillée dans la suite de cette description, le dispositif de la présente invention nécessite d'utiliser une vanne de soutirage présentant certaines caractéristiques particulières, notamment, dans le cas du dispositif selon les figures 1 et 2, possédant une ouverture de sortie munie d'ergots de fixation. De ce fait, le dispositif 1 s'accompagne de l'utilisation d'une interface 10 apte à se connecter sur la vanne de soutirage et possédant les caractéristiques particulières susmentionnées, notamment une ouverture de sortie 11 munie d'ergots de fixation 12. Par ailleurs, dans la suite de cette description et par convention, le terme avant se référera aux parties ou éléments dirigés vers l'interface 10 dans la position montée du dispositif 1 et le terme arrière se referrera aux parties ou éléments dirigés à l'opposé de l'interface 10 dans la position montée du dispositif 1.

Le dispositif 1 comprend deux parties principales démontables, à savoir un réservoir 20 destiné à recevoir le produit à prélever au travers d'une ouverture d'admission 21 et un piston 30 ayant pour fonction de fermer de manière étanche l'ouverture de sortie 11 et l'ouverture d'admission 21. Le réservoir est par ailleurs muni d'un fond amovible 32 solidaire du piston 30. Dans la configuration représentée, le fond 32 se présente sous la forme d'un plateau circulaire muni d'une ouverture centrale 33 circulaire à travers laquelle circule le corps du piston 34, ledit plateau 32 venant se plaquer contre la face arrière 23 d'un rebord annulaire 22 formé à l'extrémité arrière du réservoir 20 et étant fixé de manière amovible audit rebord annulaire 22 au moyen d'un collier de fixation 35. La face arrière 23 du rebord annulaire 22 comportera avantageusement une rainure circulaire 24 destinée à recevoir un joint élastique d'étanchéité. En outre, les faces latérales 25 globalement cylindriques du réservoir 20 sont munies d'une fenêtre transparente 26 de manière à permettre l'observation de l'intérieur du réservoir 20 lors de l'introduction du produit. De façon à permettre la connexion du réservoir 20 sur l'interface 10, la face d'extrémité 29 du réservoir 20 comportant l'ouverture d'admission 21 est prolongée dans la direction de l'interface 10 d'une collerette tubulaire 27, ladite collerette étant munie de deux rainures 28 diamétralement opposées, décrivant sensiblement une forme en L et configurées pour former une fixation de type à baïonnette avec deux ergots 14 disposés en saillie au niveau de la paroi latérale cylindrique externe 13 de l'interface 10. L'un des ergots 14 pourra avantageusement être plus petit que l'autre de manière à sélectivement ne venir en prise qu'avec une seule des rainures 28 et ainsi éviter un montage inversé du réservoir 20 sur l'interface 10. Bien entendu, il est également envisageable de n'utiliser qu'un seul ergot et qu'une seule rainure pour connecter le réservoir 20 à l'interface 10. Par ailleurs, il sera également avantageux de fixer sur la face d'extrémité arrière 15 de l'interface 10 un joint plat 16, notamment au moyen de vis de fixation 17. En effet, dans la position montée du réservoir 20 sur l'interface 10, il est préférable que la face d'extrémité 15 soit en contact étanche avec la face d'extrémité avant 29 du réservoir de manière à ce que le produit circule uniquement et directement de l'ouverture de sortie 11, qui débouche sur la face d'extrémité 15, vers l'ouverture d'admission 21 disposée dans son alignement. Il faut préciser dès maintenant que, dans la configuration représentée, les ouvertures de sortie 11 et d'admission 21 possèdent sensiblement le même diamètre.

A présent, il est nécessaire d'expliquer le fonctionnement général du dispositif de la présente invention. En fait, le dispositif possède trois états de fonctionnement principaux, à savoir:
- un premier état dans lequel le réservoir 20 est monté sur l'interface 10, le produit à prélever pouvant circuler à travers les ouvertures de sortie 11 et d'admission 21;
- un deuxième état dans lequel le réservoir 20 est monté sur l'interface 10, les ouvertures de sortie 11 et d'admission 21 étant fermées et empêchant le produit de pénétrer à l'intérieur du réservoir 20;
- un troisième état dans lequel le réservoir 20 est déconnecté de l'interface 10. Dans ce cas, un élément d'obturation séparable 50, qui était fixé de manière amovible à l'extrémité du piston 30 dans la position montée du réservoir 20, est désormais détaché de reste du piston et fixé sur l'interface 10 au niveau de l'ouverture de sortie 11 de manière à obturer ladite ouverture de sortie 11 et ainsi empêcher toute fuite de produit au travers de ladite ouverture de sortie 11.
À ces trois états de fonctionnement correspondent différentes positions du piston 30. En effet, le piston 30 possède au moins une première position dans laquelle il n'obture pas les ouvertures de sortie 11 et d'admission 21, ce qui correspond au premier état de fonctionnement du dispositif 1, et au moins une seconde position dans laquelle il ferme de manière étanche les ouvertures de sortie 11 et d'admission 21, ce qui correspond aux deuxième et troisième états de fonctionnement du dispositif 1. Toutefois, il faut préciser que dans le troisième état de fonctionnement, contrairement au deuxième état de fonctionnement, le piston 30 n'est plus en un seul bloc, l'élément d'obturation séparable 50 étant déconnecté du reste du piston et étant fixé sur l'interface 10. Dans la suite de cette description et par convention, le reste du piston connecté à l'élément d'obturation 50 sera désigné par les termes "partie non séparable du piston". Ces termes ne signifient évidemment pas que les éléments constituant le reste du piston ne peuvent pas être séparés ou désassemblés. Ils signifient uniquement que, lors de l'utilisation du dispositif 1, ces éléments n'ont pas vocation à être séparés, contrairement à l'élément d'obturation 50.

Considérant que, au moins sur un tronçon situé à l'avant du plateau 32, le piston 30 possède approximativement une forme cylindrique définie par sa direction axiale D et est aligné avec les ouvertures de sortie 11 et d'admission 21, les deux positions susmentionnées correspondent à deux positions différentes du piston 30 le long de l'axe D: l'une, à savoir la première position, dans laquelle le piston 30 est décalé axialement vers l'arrière par rapport à la position des ouvertures de sortie 11 et d'admission 21 et l'autre, à savoir la seconde position, dans laquelle le piston 30 s'est déplacé axialement vers l'avant par rapport à la première position de telle sorte que le piston 30 est positionné en travers des ouvertures de sortie 11 et d'admission 21. En outre, la fermeture étanche de l'ouverture d'admission 21 dans la seconde position du piston 30 s'explique par la présence le long du piston 30 d'au moins un segment cylindrique dont le diamètre augmente lorsque le piston 30 passe de la première à la seconde position. Ce segment cylindrique est configuré pour se positionner au niveau de l'ouverture d'admission 21 dans la seconde position du piston 30. Ainsi, en choisissant un diamètre de paroi externe pour le piston 30 légèrement inférieur à celui de l'ouverture 21, le piston 30 peut coulisser axialement au travers de ladite ouverture 21 avant qu'il n'atteigne sa seconde position de fonctionnement et, en configurant ledit segment cylindrique de telle sorte que, dans son état expansé, son diamètre soit légèrement supérieur à celui de l'ouverture 21, on aboutit à une fermeture étanche de ladite ouverture 21 lorsque le piston 30 atteint sa seconde position de fonctionnement. Comme précisé plus loin, une solution possible pour obtenir un accroissement du diamètre de ce segment cylindrique consiste notamment à utiliser un joint élastique déformable qui s'expanse radialement lorsqu'il subit une compression axiale.

Le passage du deuxième état de fonctionnement au troisième état de fonctionnement se produit lors de la déconnexion du réservoir 20 et de l'interface 10. Dans la configuration représentée, le réservoir 20 et l'interface 10 étant connectés l'un à l'autre au moyen d'une fixation par baïonnette, la déconnexion s'opère au final en faisant tourner d'abord le réservoir 20 autour de l'axe D et en le faisant coulisser le long de l'axe D jusqu'à ce que les ergots 14 sortent des rainures 28. Le piston 30 étant solidaire du réservoir 20 tant que le fond 32 reste fixé sur le rebord annulaire 22, le piston 30 effectue donc les mêmes déplacements que le réservoir 20 lors de la déconnexion du réservoir 20 et de l'interface 10. Toutefois, il s'avère que durant la rotation du piston 30 autour de l'axe D, l'élément d'obturation 50 atteint une première position limite dans laquelle il est lié à l'interface 10 au moyen d'une fixation par baïonnette et, de ce fait, ledit élément d'obturation 50 reste fixe une fois la première position limite atteinte. En effet, au cours de la rotation autour de l'axe D, l'élément d'obturation 50 tourne conjointement avec le piston 30 jusqu'à ce que les ergots 12 disposés radialement en saillie au niveau du pourtour de l'ouverture de sortie 11 forment, dans la première position limite, une fixation de type à baïonnette avec des rainures 51 formées le long de la paroi cylindrique externe dudit élément d'obturation 50 et décrivant au moins une forme en L. Bien entendu, cette fixation n'est possible que si, lors du déplacement du piston 30 de sa première position à sa seconde position, les ergots 12 sont parfaitement alignés avec les parties orientées selon l'axe D des rainures 51. En outre, de façon à éviter que du produit reste coincé à l'intérieur des rainures 51 lorsque les ergots 12 viennent s'enclencher dans les rainures 51 et ainsi empêche que l'élément d'obturation 50 atteigne la première position limite, il est avantageux de donner une forme en U aux rainures 51, le produit pouvant ainsi s'échapper par la deuxième branche du U lorsque l'élément d'obturation atteint la première position limite. Par ailleurs, de manière à éviter que du produit ne vienne recouvrir la face d'extrémité avant 55 de l'élément d'obturation 50 lors du remplissage du réservoir 20, ladite face d'extrémité avant 55 possède avantageusement une forme conique facilitant ainsi l'écoulement du produit vers le fond 32 du réservoir 20.

Une fois la première position limite atteinte, l'élément d'obturation 50 reste fixé sur l'interface 10 et seule la partie non séparable du piston 30 continue de tourner jusqu'à atteindre une seconde position limite dans laquelle la partie non séparable du piston 30 peut effectuer une translation selon la direction D de telle sorte que les ergots 14 sortent des rainures 28. Au cours de ces déplacements successifs de rotation autour de la direction D de la première position limite à la seconde position limite et de translation selon la direction D, une fixation de type à baïonnette existant entre l'élément d'obturation 50 et la partie non séparable du piston 30 se rompt. Dans la configuration représentée, la fixation par baïonnette susmentionnée s'obtient par la mise en prise d'un élément en relief 41, positionné sur la face avant d'un élément d'extrémité 40 de la partie non séparable du piston 30, avec une creusure 52 formée à l'intérieur de la face arrière de l'élément d'obturation 50. L'élément en relief 41 possède un premier segment plat de forme sensiblement rectangulaire, ledit segment étant positionné perpendiculairement à la direction D et étant relié à la face avant de l'élément d'extrémité 40 par un second segment aligné avec la direction D de telle sorte que l'élément en relief 41 décrit une forme générale en T et en ce que la creusure 52 possède au moins deux parties séparées axialement, une première partie débouchant sur la face arrière de l'élément d'obturation 50 et possédant une forme sensiblement complémentaire de celle du premier segment de l'élément en relief 41 et une seconde partie débouchant sur la première partie et décrivant une portion de disque sensiblement complémentaire de la portion de disque décrite par le premier segment de l'élément en relief 41 lorsque la partie non séparable du piston 30 effectue la rotation selon la direction D depuis la première position limite jusqu'à la seconde position limite. En outre, de façon à plaquer hermétiquement la face avant de l'élément d'extrémité 40 contre la face arrière de l'élément d'obturation 50 lorsque l'élément d'obturation 50 est fixé à la partie non séparable du piston 30 et ainsi éviter que du produit vienne s'insérer entre ladite face avant et ladite face arrière lors du remplissage du réservoir 20, il est avantageux de disposer des aimants 42 sur ladite face avant, ou, dans une autre configuration non représentée, sur ladite face arrière.

L'élément d'obturation 50 possède également une rainure annulaire 53 le long de sa face latérale cylindrique externe destinée à loger un joint d'étanchéité 54. Ledit joint 54 est destiné à assurer une fermeture étanche de l'ouverture de sortie 11 dans la seconde position de fonctionnement du piston 30. De façon similaire, un joint élastique déformable 43 en forme d'anneau positionné entre l'extrémité avant du corps de piston 34 et la face arrière de l'élément d'extrémité 40 assure quant à lui la fermeture étanche de l'ouverture d'admission 21 dans la seconde position de fonctionnement du piston 30. Le corps de piston 34 comporte notamment deux parties cylindriques de diamètre différent, à savoir une partie d'extrémité avant 34a et une partie d'extrémité arrière 34b, le diamètre de la partie d'extrémité avant 34a étant légèrement inférieur à celui de la partie d'extrémité arrière 34b. Ainsi, le joint élastique 43 possédera, avant sa compression axiale, un diamètre interne sensiblement égal à celui de la partie d'extrémité avant 34a de manière à permettre sa mise en place autour de ladite partie d'extrémité avant 34a et un diamètre externe sensiblement égal à celui de la partie d'extrémité arrière 34b et de l'élément d'extrémité 40. En outre, l'élément d'extrémité 40 présentera une saignée 44 sur sa face arrière, le diamètre et la profondeur de ladite saignée 44 étant choisis de manière à permettre un coulissement de la partie d'extrémité avant 34a dans ladite saignée 44 en provoquant la compression axiale du joint 43 et son gonflement. On constate donc que, dans la configuration représentée, l'élément d'extrémité 40 a deux fonctions distinctes. D'une part, comme vu précédemment, il permet de fixer l'élément d'obturation 50 sur la partie non séparable du piston 30. D'autre part, il joue le rôle de disque compresseur au sein d'un dispositif dilateur configuré pour expanser radialement le joint 43. le principe de fonctionnement de ce dispositif dilateur et la manière de déplacer axialement le corps de piston 34 sera évoqué succintement dans la suite de la description étant donné qu'il ne fait que reprendre un principe similaire à celui divulgué dans le brevet EP-1 282 795-B1. Au besoin, L'homme du métier pourra utilement s'y référer pour compléter le contenu de la présente description. Tel que représenté sur les figures 1 et 2, le piston 30 comprend donc un corps de piston 34, une vis de déplacement 36 pourvue de moyens d'entraînement en rotation 37 et coopérant avec un écrou 38 solidaire du corps de piston 34 pour déplacer ce dernier en réponse aux rotation de la vis 36. Les moyens d'entraînement en rotation 37 pourront notamment être des moyens manuels, tels qu'un volant ou une manivelle, ou des moyens automatiques, du type électrique, pneumatique ou hydraulique. Lors de son déplacement axial vers l'arrière, la partie d'extrémité arrière 34b du corps de piston 34 coulissera à l'intérieur d'un tube 39 solidaire du fond 32 et disposé à l'arrière dudit fond 32 et dans le prolongement axial de l'ouverture centrale 33. Ledit tube 39 permet notamment une meilleure saisie manuelle de l'ensemble constitué par le réservoir 20 et le piston 30 lorsque le fond 32 est solidaire du réservoir 20 ou du seul piston 30 lorsque le fond 32 est déconnecté du réservoir 20. En outre, des moyens seront prévus pour empêcher une rotation du piston 30 lors de la rotation de la vis 36. Ces moyens pourront notamment consister en une vis de blocage de l'écrou 38 dans son taraudage. Ladite vis de blocage pourra avantageusement posséder une extrémité saillante dépassant de la face latérale externe du tube 39 et coulissant dans une fente longitudinale formée le long de ladite face latérale externe. Le piston 30 comprend également un dispositif dilateur formé par le disque compresseur 40 et un tirant 45 ayant son extrémité avant solidaire du disque 40. Conformément au piston décrit dans le brevet EP-1 282 795-B1, la vis 36 présentera donc, d'une part, un logement longitudinal dans lequel le tirant 45 est engagé et, d'autre part, à son extrémité avant, une butée qui coopère, dans la seconde position du piston 30, avec une collerette du tirant 45 située à son extrémité arrière de manière à provoquer un serrage du disque compresseur 40 contre la face d'extrémité avant de la partie d'extrémité arrière 34b du corps de piston 34 et une compression axiale du joint 43 positionné entre ledit disque 40 et ladite face d'extrémité avant.

## Revendications

1. Dispositif (1) de prélèvement d'échantillons de produit destiné à être connecté de manière amovible à une vanne de soutirage (10) munie d'une ouverture de sortie (11) de produit, comprenant:
- un réservoir (20) apte à contenir le produit à prélever, ledit réservoir étant muni d'une ouverture d'admission (21) à travers laquelle le produit à prélever peut pénétrer à l'intérieur du réservoir,
- des moyens de connexion (28) aptes à fixer de manière amovible ledit réservoir (20) à ladite vanne de soutirage (10),
- des moyens (30) de fermeture étanche de ladite ouverture de sortie (11) et de ladite ouverture d'admission (21),
**caractérisé en ce que** lesdits moyens de fermeture étanche comprennent un piston (30) définissant une direction axiale D, ledit piston possédant au moins une première position dans laquelle le produit à prélever peut circuler à travers les ouvertures de sortie (11) et d'admission (21) et au moins une seconde position dans laquelle les ouvertures de sortie (11) et d'admission (21) sont fermées et empêchent le produit de pénétrer à l'intérieur du réservoir (20),
et **en ce qu'**un élément d'obturation (50) séparable fixé de manière amovible à une partie non séparable du piston (30) et configuré pour obturer ladite ouverture de sortie (11) dans la seconde position du piston (30) est apte à se détacher de ladite partie non séparable dans ladite seconde position lorsque le réservoir (20) est déconnecté de la vanne de soutirage (10).

2. Dispositif (1) selon la revendication 1, **caractérisé en ce que**, lors de la déconnexion du réservoir (20), la partie non séparable du piston (30) effectue successivement une rotation autour de la direction D et une translation selon la direction D et l'élément d'obturation (50) effectue uniquement une rotation autour de la direction D jusqu'à atteindre une première position limite dans laquelle ledit élément d'obturation (50) est lié à la vanne de soutirage (10) au niveau de l'ouverture de sortie (11).

3. Dispositif (1) selon la revendication précédente, caractérisé en que, au cours de la rotation autour de la direction D effectuée lors de la déconnexion du réservoir (20), l'élément d'obturation (50) tourne conjointement avec la partie non séparable du piston (30) jusqu'à ce qu'au moins un ergot (12) disposé radialement en saillie au niveau du pourtour de l'ouverture de sortie (11) forme, dans la première position limite, une fixation de type à baïonnette avec au moins une rainure (51) formée le long de la paroi cylindrique externe dudit élément d'obturation (50) et en ce que, une fois la première position limite atteinte, ledit élément d'obturation (50) reste fixé sur la vanne de soutirage (10) et seule la partie non séparable du piston (30) continue de tourner jusqu'à atteindre une seconde position limite dans laquelle la partie non séparable du piston (30) peut effectuer la translation selon la direction D de telle sorte qu'une fixation de type à baïonnette existant entre l'élément d'obturation (50) et la partie non séparable du piston (30) soit rompue.

4. Dispositif (1) selon la revendication précédente, **caractérisé en ce que** la face arrière de l'élément d'obturation (50) possède une creusure (52), ladite creusure étant configurée pour former une fixation de type à baïonnette avec un élément en relief (41) positionné à l'extrémité (40) de la partie non séparable du piston (30).

5. Dispositif (1) selon la revendication précédente, **caractérisé en ce que** l'élément en relief (41) possède un premier segment plat de forme sensiblement rectangulaire, ledit segment étant positionné perpendiculairement à la direction D et étant relié à l'extrémité (40) de la partie non séparable du piston (30) par un second segment aligné avec la direction D de telle sorte que l'élément en relief (41) décrit une forme générale en T et **en ce que** la creusure (52) possède au moins deux parties séparées axialement, une première partie débouchant sur la face arrière de l'élément d'obturation (50) et possédant une forme sensiblement complémentaire de celle du premier segment de l'élément en relief (41) et une seconde partie débouchant sur la première partie et décrivant une portion de disque sensiblement complémentaire de la portion de disque décrite par le premier segment de l'élément en relief (41) lorsque la partie non séparable du piston (30) effectue la rotation selon la direction D depuis la première position limite jusqu'à la seconde position limite.

6. Dispositif (1) selon la revendication précédente, **caractérisé en ce que** des aimants (42) sont disposés sur la face avant de l'extrémité (40) de la partie non séparable du piston (30) de manière à plaquer hermétiquement ladite face avant contre la face arrière de l'élément d'obturation (50) lorsque l'élément d'obturation (50) est fixé à la partie non séparable du piston (30).

7. Dispositif (1) selon l'une quelconque des revendications 3 à 6, **caractérisé en ce que** la rainure (51) formée le long de la paroi externe de l'élément d'obturation (50) possède une forme en U de façon à éviter que du produit reste coincé à l'intérieur de la rainure (51) lorsque l'élément d'obturation (50) vient se fixer sur la vanne de soutirage (10).

8. Dispositif (1) selon l'une quelconque des revendications précédentes, **caractérisé en ce que** le piston (30) possède une paroi externe cylindrique, le diamètre de ladite paroi externe étant légèrement inférieur au diamètre de l'ouverture d'admission (21) avant que le piston (30) n'atteigne sa seconde position de fonctionnement de manière à permettre le coulissement axial du piston (30) au travers de ladite ouverture d'admission (21) et le diamètre de ladite paroi externe étant, sur au moins un segment cylindrique (43) positionné au niveau de ladite ouverture d'admission (21) dans la seconde position de fonctionnement du piston (30), légèrement supérieur au diamètre de ladite ouverture d'admission (21) de manière à empêcher la circulation du produit au travers de ladite ouverture (21).

9. Dispositif (1) selon la revendication précédente, **caractérisé en ce que** ledit segment cylindrique de la paroi externe du piston (30) est formé par un joint élastique (43) déformable qui s'expanse radialement lorsqu'il subit une compression axiale.

10. Dispositif (1) selon la revendication précédente, **caractérisé en ce que** le piston (30) comprend un corps de piston (34), une vis de déplacement (36) pourvue de moyens d'entraînement en rotation (37) et coopérant avec un écrou (38) solidaire du corps de piston (34) pour déplacer ce dernier en réponse aux rotations de la vis (36), et un dispositif dilateur (40, 45) lié au corps de piston (34) et provoquant dans la seconde position du piston (30) une compression axiale du joint élastique (43).

11. Dispositif (1) selon la revendication précédente, **caractérisé en ce que** le dispositif dilateur comprend un disque compresseur (40) et un tirant (45) ayant une extrémité solidaire du disque (40), le disque (40) étant positionné entre le corps de piston (34) et l'élément d'obturation (50) séparable, et **en ce que** la vis (36) présente d'une part un logement longitudinal dans lequel le tirant (45) est engagé et d'autre part à son extrémité avant une butée qui coopère dans la seconde position du piston (30) avec une collerette du tirant (45) située à son extrémité arrière de manière à provoquer un serrage du disque compresseur (40) contre le corps du piston (34) et une compression axiale du joint élastique (43) positionné entre le disque compresseur (40) et le corps de piston (34).

12. Dispositif (1) selon l'une quelconque des revendications précédentes, **caractérisé en ce que**, lors de la connexion et/ou déconnexion du réservoir (20) sur la vanne de soutirage (10), le piston (30) est solidaire du réservoir (20).

13. Dispositif (1) selon la revendication précédente, **caractérisé en ce que** le réservoir (20) possède un fond (32) amovible, ledit fond (32) étant solidaire du piston (30).

14. Dispositif (1) selon la revendication précédente, **caractérisé en ce que** le réservoir (20) possède à son extrémité arrière un rebord annulaire (22) contre la face arrière (23) duquel vient se plaquer un plateau circulaire (32) jouant le rôle de fond, ledit plateau (32) étant fixé de manière solidaire au piston (30) et étant fixé de manière amovible au rebord annulaire (22) au moyen d'un collier de fixation (35).

15. Dispositif (1) selon la revendication précédente, **caractérisé en ce que** la face arrière (23) du rebord annulaire (22) comporte une rainure circulaire (24) destinée à recevoir un joint élastique d'étanchéité.

16. Dispositif (1) selon l'une quelconque des revendications précédentes, **caractérisé en ce que** les moyens de connexion sont constitués par au moins une rainure (28) en L formée à l'intérieur d'une collerette tubulaire (27) disposée dans le prolongement axial de la face d'extrémité (29) du réservoir (20) comportant l'ouverture d'admission (21), ladite rainure (28) étant configurée pour former une fixation de type à baïonnette avec un ergot (14) solidaire de la vanne de soutirage (10).
